# EUROPEAN PATENT APPLICATION

(11) **EP 2 944 618 A1**
(43) Date of publication of application: **18.11.2015**
(21) Application number: 15460015.9
(22) Date of filing: 08.05.2015
(51) Int. Cl.: C03C 1/02

(54) **METHOD OF GLASS BATCH THICKENING**

(30) Priority: 14.05.2014 PL 40820814
(71) Applicant: Techglass Sp. z o.o., 30-198 Krakow (PL)
(72) Inventor: Klisch, Marian, 38-400 Krosno (PL); Kadow, Grazyna, 64-920 Pila (PL); Lenartowicz, Jacek, 64-917 Skórka (PL)
(74) Representative: Magonska, Alina

(57) **Abstract**

The core of this invention is a method for thickening glass batch in the course of glass melting.

The method for thickening glass batch includes addition of binding agent, in a form of aqueous suspension that contains sol of hydrated calcium and sodium aluminosilicates, to basic glass batch. Sol of hydrate calcium and sodium aluminosilicates is obtained through accelerated geopolymerisation.

## Description

The core of this invention is a method for thickening glass batch in the course of glass melting.

Thickening, through application of caking, pelletizing, or briquetting of raw materials, enables enhanced control over material composition in the course of furnace loading. Thickening eliminates, or at least minimises, the possibility of raw material segregation in the course of transport, melt separation at early stage of melting, and so called "raw materials' loosening" in the furnace batch charger area. Moreover, thickening accelerates the melting process allowing for a decrease in the (required) maximum furnace temperature even by 50°C. Approximately 5% process efficiency increase and approx. 5% unitary energy consumption decrease (M Rongen, H. Van Limpt, P. Marson. Advantages of pelletized raw materials. Proc. 23-th International Congress on Glass, Prague, 1 - 5∼July 2013*)* have been observed. Thickened glass batch may be heated by waste acquired from furnace gas. Preheating of thickened batches may generate energy savings even up to 20-25%. In order to obtain this effect it is necessary to maintain mechanical strength of thickened batch in the course of heating.
Foregoing advantages make the issue of thickening glass batches the subject of numerous patent applications.

In American Patent Specification US 3967943 as of 1974-07-06: *Method of improving glass batch making by use of water-glass,* replacement part of raw materials, which were traditionally used for introducing alkalies, with 1.6 to 3.8 module hydrated sodium silicate (so called water-glass) in the amount of 1 to 10% of total amount of Na₂O in glass was proposed. This glass batch was not subject to pelletizing and the purpose of water-glass application was to enhance the method of coating glass with the batch placed in the furnace and thus decrease the number of blisters and streaks in the products.

As per American Patent Specification US 3914364 as of 1975-10-31: *Method of pelletizing glass batch materials,* the method of glass batch pelletizing is based on the use of disc pelleting machine that is fed with initially mixed glass batch characterised in that it contains, appropriately, up to 15 or 25% of limestone and/or dolomite in which the granulation does not exceed 0.08 mm (325 mesh) and/or 0.128 mm (200 mesh), appropriately, and aqueous 40-73% NaOH solution in the amount of up to 15% with reference to the batch weight.

In American Patent Specification US 4023976 as of 1976-05-17: *Manufacture of glass using briquettes,* the method for increasing the amount of molten glass extracted from the furnace without the necessity to increase temperature to 1590°C, through briquetting the mixed and stabilised raw materials (throughout 10 minutes) with a binding agent in the form of aqueous NaOH solution in the amount of 10% was described.

In American Patent Specification US 4026691 as of 1977-05-31: *Making a pelletized glass batch for soda-lime glass manufacture,* the method for pelletizing batch that included adding slurry, which was obtained through the initial reaction of aqueous NaOH (58-75%) solution with part of soda-lime and dolomite in 80-160°C in the period of 10 to several minutes, was described. Pelletizing is carried out in a disc pelleting machine.

In American Patent Specification, US 4028131 as of 1977-06-07: *Raw materials for glass making and method of making them,* the method for preparation of batch used for pelletizing that includes initial mixing of sand with burnt lime and/or calcined dolomite and caustic soda with or without the help of salts of alkaline metals was unveiled. Pelletizing was carried out in a drum pelleting machine with application of simultaneous water spraying. Caustic soda was used to introduce 15 to 100 alkalies that were contained in glass.

American Patent Specification US 4031175 as of 1977-06-21: *Glass batch pelletizing method,* presents a pelletizing method in which a hot solution of 50-70% alkaline hydroxides is added directly to the dry raw materials placed in a disc pelleting machine. At least 20% of dolomite and limestone size composition does not exceed 0.25 mm (100 mesh) and 15% of dolomite and limestone size composition does not exceed 0.128 mm (200 mesh).

American Patent Specification US 4235618 as of 1980-11-25: *Glass manufacturing process employing glass batch pellets,* describes the method for glass batch pelletizing on boronaluminosilicate glass, where 5 parts of dry glass batch pellets are added to 100 parts of pelletized batch along with 12 to 14% of water.

In American Patent Specification US 4236 929 as of 1980-12-02: *Rapid strength development in compacting glass batch materials,* the method for mechanical strengthening of raw material briquets through keeping them at temperatures lower than 10°C for less than 10 min was described.

In American Patent Specification US 4252754 as of 1981-02-24: *Process for manufacturing glass raw materials granular pellets* the method for granular pellets treatment with furnace hot waste gas through application of 48% NaOH that was used for introduction of 0.4 to 1.0% Na₂O in glass was described.

Polish Patent Specification PL 111274 z 1981-09-30: *Glass batch pelletizing method,* presents the pelletizing method that applies 10-30% (weight percent) of 0.1 - 2.5 mm grained glass powder, which content is compliant to pelletized glass batch, and 8 to 15% volume of hydrated sodium silicates (so called water-glass).

In American Patent Specification US 4349366 as of 1982-09-14: *Glass batch pellets production and drying process,* continuous method for pelletizing in a drum pelleting machine was described. To initiate pelletizing, part of the created granular pellets that are subject to drying up to 4-12% humidity is used. Pelletizing includes sequential addition of sand, followed by limestone and finally NaOH.

In American Patent Specification US 6296699 as of 2001-10-02: *Inorganic binders employing waste glass,* an inorganic binding agent used for obtaining so called artificial stone is described. This binding agent is obtained through alkaline activation of glass powder, the granulation of which does not exceed 0.15 mm (preferably 0.075 mm) with application of activator in the form of hydroxide, silicate, alumiante, carbonate, phosphate, lithium fluoride, sodium fluoride or potassium fluoride in the amount not exceeding 20% of glass powder, preferably in the amount of 3-15% glass powder. Additionally, some hardener is introduced into the system. This may be sodium fluosilicate, aluminium phosphate or Portland cement in the amount of 0 to 50% of activator, preferably 0 to 10%. The process of glass powder binding is carried out in 0 to 120°C throughout 1 to 24 hours, or in 40 to 100°C throughout 1 to 60 hours.

The pelletizing method described in American Patent Specification US 4236929 uses the tendency of soda to create hepta- and decahydrates upon lowering the temperature to 35.4 or 32.0°C, respectively. Quick water binding by soda may be used for thickening the glass batch but two crucial drawbacks must be mentioned here: the first is the instability of the granules which disintegrate upon re-heating to temperatures exceeding 35.4°C and the second, related to the previous one, is inapplicability of thickened glass batch for preheating with waste heat as per described method.

The methods included in American Patent Specifications US 3967943, US 3914364, US 4023976, US 4026691, US 28131 and US 311175 are based on reaction of superficial dissolving of sand grains (and feldspar, alternatively) in sodium hydroxide solution. The created thin layer of hydrated silicates leads to certain binding effect; however considering ingress of remaining components of glass batch such as limestone, dolomite, soda, sulphate (or anhydrite) into these layers, adhesive forces are extremely weak. Granules' low temperature strength is determined, most of all, by soda hydrates which are created in the course of cooling to 34.5°C. Granules obtained in this manner are characterized by insufficient mechanical and thermal strength and that prevents these from being used for waste heating.

In the methods described in American Patent Specifications US 3914364 and US 4031175, the binding effect is additionally supported by calcium and/or magnesium hydroxide formed *in-situ"* as a result of reaction of soda hydroxide with limestone and/or dolomite. The range of this effect is even greater upon application of the method that was described in the Patent Specification US 4026691, where reaction of hydroxide with carbonates is carried out at increased temperature.

The method described in the American Patent Specification US 4349366 suggests the use of only part of the granules which were previously obtained and dried. These would be used as seeding nuclei in pelletizing consecutive portions of glass batch.

Processes included in the Patent Specifications PL 111274 and US 6296699 are based on superficial dissolving of glass powder in a strongly alkaline environment. Considering amorphous development of glass and related excessive energy and presence of alkalines in its composition, velocity of dissolving cullet is increased in comparison to quartz sand in identical conditions. Considering the size of powder grains, 0.1 to 0.15 mm, the range of superficial reactions is markedly insignificant to provide effective thickening of glass batches, specifically those that have been allotted to waste heating.

Publication by B.S. Gebregziabiher and S. Peethamparan (Role of activator type and dosage on the reaction kinetics of alkali-activated slag pastes. 3rd Int. Conf. Suistainable Construction Materials and Technologies. Kyoto, Japan. 2013-08-18-21*)* brings the results of studies related to activation of fine-milled blast-furnace slag (average graining 7.5 µm) which contains 10.5% Al2O3 and 39.8% CaO with SiO₂/Na₂O = 1.5 and 2.5 module water-glass at 25°C, which proved that exothermic dissolving commences immediately upon combining both ingredients. It acknowledges that precursors which are necessary to generate the aluminosilicate binder used for thickening glass batches may be obtained through several-minute activation of fine-milled slag in 1.5 - 2.5 SiO₂/Na₂O module hydrated sodium silicate solutions.

From a mineralogical point of view, granulated blast-furnace slag may be treated as an amorphous analogue of mellite (solution of stable gehlenite Ca₂Al [(Si, Al)₂O₇], akermanite Ca₂Mg[Si₂O₇] and merwinite Ca₃Mg(SiO₄)₂).

The article by J. Davidovits: Application of Ca-based geopolymer with blast furnace slag, a review. 2∼nd International Slag Valorisation Symposium, Leuven, 2011*,* describes application of slag as a precursor of poly(aluminosilicate)s obtained in the course of geopolymerisation. Inès Garcia-Lodeiro, D. M. (2011). Activation of aluminosilicates - some chemical considerations. 2-nd International Slag Valorisation Symposium, Leuven,2011 proved that thermodynamical issues are the reason for quicker disintegration of -Al-O-Si- in comparison to -Si-O-Si-bonds in alkaline environment. It concerns specifically amorphous materials. A hydrolytic impact of OH⁻ groups is supported by dislocation of oxygen electron in-Al-O-Si- bridge towards aluminium. As gehlenite is the only slag phase that includes aluminium, basing on foregoing informations a general rule may be framed saying that reactivity of slags is increased along with increase of aluminium content, thus these types of raw materials which are characterised by the highest concentration of Al₂O₃ seem to be the most useful for the application in the generation of binding agent that is based on sols of hydrated calcium and sodium aluminosilicates that are obtained as a result of activation in hydrated sodium silicate environment.

Requirements towards slag activation in order to obtain the binding agent for granulation of glass batch differ from those that are specific for slag used as geopolymer precursor. In the latter case, the crucial issues are mechanical and chemical strength at initial and upon full period of binding. For both periods, duration is identical as in the case of concretes obtained on the basis of Portland cement. Frequently, these are: a day or a month, appropriately. Time scale for preparation of glass batch is significantly shorter in comparison to geopolymers generation. It ranges from merely few to several minutes. Except that, in the case of glass batch thickening, it is not required to maintain the same level of mechanical strength of the final product as it is in case of geopolymers and obtained impact and compression strength should prevent from arising dust in the course of transport and potential waste heating.

In order to obtain significant amount of sol of hydrated aluminosilicates which would be sufficient for binding ingredients of glass batch into mechanically and thermally stable granules throughout few to several minutes it is necessary to accelerate and improve effectiveness of both or at least the last stage of geopolymerisation.

According to J. Davidovits: Application of Ca-based geopolymer with blast furnace slag, a review. 2∼nd International Slag Valorisation Symposium, Leuven, 2011*,* the process of geopolymerisation of mellilites, mineral analogues of slag, runs in two stages:
In the first stage, as a result of alkalies' interaction, bonding cleavage occurs in ghelenite, akeremanite and merwinite structures. The products of gehlenite dissolving include particles of hydrated calcium and sodium orthosilans (as per the nomenclature applied in chemistry of geopolymers introduced by Davidovits) with following formula: Ca²⁺··· Si[O₂OH]-O-Al[O(OH)₂]⁽⁻⁾ ··· Na⁺ (that is as per complex systematics: calcium and sodium alumino-oxo-dihydroxo-µokso-dioxo-hydroxosilicate) and aluminium hydroxide: Al(OH)₃. The products of akermanite dissolving include particles of hydrated calcium disiloxanes (as per the nomenclature applied in chemistry of geopolymers introduced by Davidovits) with following formula: Ca²⁺··· Si[O₂OH]-O-Si[O₂OH] ··· Ca²⁺ (that is as per polysilicate systematics: calcium dihydroxodisilicate) and magnesium hydroxide: Mg(OH)₂ and products of merwinite dissolving: particles of hydrated calcium disiloxanes (as per the nomenclature applied in chemistry of geopolymers introduced by Davidovits) with following formula: Ca²⁺··· Si[O₂OH]-O-Si[O₂OH] ··· Ca²⁺ (that is as per polysilicate systematics: calcium dihydroxodisilicate) and calcium hydroxide: Ca(OH)₂.
In the second stage, polycondensation begins with the reaction of particles of hydrated calcium and sodium orthosilans with particles of hydrated calcium disilixanes. As a result calcium and sodium cycloorthodisiloxosilanes are generated (as per the nomenclature applied in chemistry of geopolymers introduced by Davidovits): 3Ca²⁺··· [Si[O₂]-O-]₃Al[O(OH)₂]⁽⁻⁾ ··· Na⁺. According to Davidovits, excess of particles of hydrated calcium disiloxanes Ca²⁺··· Si[O₂OH]-O-Si[O₂OH] ··· Ca²⁺ that generate as a result of bonding breach in akermanite and merewinite phases does not participate in the process of generation of multi-particle structures and remains in the form of isolated monomer. Free aluminium, calcium, and magnesium hydroxides precipitate from the solution and slowly react with CO₂ derived from the atmosphere in the course of bonding. Finally CaCO₃, MgCO₃ and hydrotalcite Ca₃(Al,Fe)₂Si₂Oₐ(OH)₄ are obtained.

The analysis of the first and the second stages proves that only acceleration of slag dissolving which may be achieved through replacement of sodium silicate solution with sodium hydroxide solution may be effective in limited range due to constant excess of non-polycondensated hydrated calcium disiloxanes towards available concentration of hydrated calcium and sodium orthosilanes. Acceleration or improvement of the first stage of geopolymerisation may be achieved through further decrease in slag granulation, but exceeding 7-10 µm seems to be unprofitable due to acceptable level of slag price as a raw material. The determining factor for the amount of hydrated calcium and sodium orthosilanes generated in the process of dissolving, which is advantageous from the point of view of polycondensation, is dependent on mutual ratio of Al₂O₃ and the sum of (CaO+MgO) in slag. This value is based on local sources of raw materials that are used in metallurgical process. For that particular reason it must be regarded as a stable quantity which is not subject to any alteration in any specific geographical conditions. Considering allowable level of transportation cost that is included in raw material total price estimation, the purchase of the most profitable type of slag, in respect to chemical composition, does not seem to be the universal solution.

The aim of this invention is to develop the method for thickening glass batch which would be characterized by lower material draftage in the course of loading and heating, lower separation tendency in the early stages of melting and quicker reaction rate, which will decrease energy consumption and/or maximum furnace temperature and/or increase extraction of melted glass. Thickened glass batches may also be used for heating with exhaust waste heat as it enables energy saving.

The core of the solution is a method for thickening of glass batch, which is based on the addition of a binding agent, obtained by means of geopolymerisation to the basic glass batch. In the course of geopolymerisation, a binding agent in the form of an aqueous suspension containing sol of hydrated calcium and sodium aluminosilicate is added to the mixture of weighed ingredients of the non-sodium glass batch. It is obtained through accelerated geopolymerisation which includes the following:
- partial dissolution of calcium precursor in hydrated sodium silicates,
- forced substitution of part of the groups [SiOₙ(OH)₍₄₋ₙ₎]ⁿ⁻ in hydrated calcium silicates with groups [AlOₙ(OH)₍₄₋ₙ₎]⁽ⁿ⁺¹⁾- ···(n+1)Na⁺ derived from the sodium aluminate solution,
- polycondensation of obtained hydrated calcium and sodium aluminosilicates,
- mixing of the binding agent with basic glass batch ingredients and supplementing with weighed portion of soda,
- granulation or briquetting,
- accelerated polycondensation of aluminosilicate binding agent.
Calcium precursors may be fine-milled slag with an average grain size between 1µm and 10µm in the amount corresponding to 1 to 15% weight of all batch ingredients, or calcium oxide with granulation not exceeding 0.01 mm in the amount of 0.25% to 0.5% in relation to the weight of the entire glass batch, or calcium hydroxide with granulation not exceeding 0.01 mm in the amount of 0.35% to 0.7% in relation to the weight of the entire glass batch.
Partial dissolution of the calcium precursor is carried out in solution of hydrated sodium silicates which features 1.6 to 2.5 initial module of SiO₂/Na₂O taken up in the amount corresponding to 1% to 5% of the SiO₂+Na₂O sum of oxides contribution of those hydrated silicates, against the weight of all ingredients of the mixture, which was obtained through dilution in the volume of water corresponding to 8% to 25% of weight of all mixture ingredients and mixed for a period of 1 to 30 minutes.
Forced substitution of part of the groups [SiOₙ(OH)₍₄₋ₙ₎]ⁿ⁻ in hydrated calcium silicates is carried out with groups [AlOₙ(OH)₍₄₋ₙ₎]⁽ⁿ⁺¹⁾⁻ ···(n+1)Na⁺ which are derived from sodium aluminate solution with Al₂0₃/Na₂0 module within the range of 0.5 to 1.0 and concentration of the sum of oxides (Al₂0₃+Na₂0) from 30 to 50%, in the amount corresponding to atomic ratio of Al (from sodium aluminate) to Si (from sodium silicate) from 0.02 to 1.
Polycondensation of the obtained hydrated calcium and sodium aluminosilicates is carried out by additional mixing for a period of 1 to 30 minutes.
The obtained binding agent is mixed with ingredients of glass batch for a period of 1 to 10 minutes at temperature maintained above 34.5°C after which at the final stage of mixing, weighed portion of soda is added.
After pelletizing or briquetting, accelerated polycondensation of the aluminosilicate binding agent in granulated or briquetted glass batch is carried out through its heating up on fluid bed, advantageously by hot air stream or exhaust waste diluted by cold air to a temperature exceeding 35.4°C, i.e. point of disintegration of the Na₂CO₃·7H₂O hydrates, advantageously up to a temperature exceeding 60°C, the most advantageously up to temperature exceeding 110°C i.e. the point of Na₂CO₃·H₂O hydrates' disintegration.
Scrap materials which arise in the course of aluminium anodizing are used as the sodium aluminate.

Novelty of this solution includes application of 3D cross-linking soles of hydrated sodium, calcium, and/or magnesium poly(aluminosilicate)s obtained directly prior to and in the course of mixing glass batches as a result of polycondensation between hydrated aluminosilicates, which is mainly calcium and sodium aluminosilicates that arise as products of reaction of fine-milled blast-furnace slag with hydrated sodium silicates (so called water-glass) with Si0₂/Na₂0 module within range 1.6 to 2.5 and sodium aluminate with Al₂0₃/Na₂O module within range 0.5 to 1.0, for binding raw materials that constitute ingredients of glass batch.

### Example of binding agent preparation

Portion of binding agent per one set of water slurry that contains 3D crosslinking soles of hydrated sodium, calcium, and magnesium polyaluminosilicates is obtained through consecutive addition of the following materials to water, taken in the amount of 8 to 25% in relation to the weight of all raw materials consisting of one portion of the batch: solution of hydrated sodium silicates (so called water-glass) with Si0₂/Na₂0 module within 1.6 to 2.5 range and concentration Σ(si0₂+Na₂0) = 35 - 45% in the amount corresponding to 0.5 to 5 % of weight of all ingredients of glass batch, granulated blast-furnace slag that has been milled to average graining not exceeding 10 µm, preferably not exceeding 7 µm, the most preferably not exceeding 2 µm in the amount corresponding to 1 to 15% of all ingredients of glass batch, and upon mixing from 3 to 20 minutes, hydrated solution of sodium aluminate with Al₂03/Na₂0 module within 0.5 to 1.0 range and concentration Σ(Al₂0₃+Na₂0) = 30 - 50% in the amount corresponding to atomic ratio of Al from sodium aluminate to Si from sodium silicate from 0.02 to 1. Upon addition of sodium aluminate, the entire batch is additionally mixed for a period of 1 to 10 minutes. The resulting suspension is added to an initial blend containing all ingredients of glass batch except for soda and mixed for a period of 2 to 10 minutes. After which, soda is added and the entire glass batch is mixed additionally for a period of 1 to 5 minutes.

In the case of highly colourless glass, where the allowed ferrous/iron concentration makes it impossible to use blast-furnace slag, an aqueous suspension containing sol of hydrated calcium aluminosilicates is obtained directly prior to introduction of raw materials to the mixture through water-glass with initial module SiO₂/Na₂O from 1.6 to 2.5 in the amount corresponding to 1 to 5 % Σ(SiO₂+Na₂0) brought by water-glass in relation to the weight of all ingredients of glass batch to water that has been taken in the amount corresponding to 8 to 25% weight of all ingredients of glass batch and then addition to the mixture of sodium aluminate aqueous solution with AlO₃/Na₂0 module within 0.5 -1.0 range and the concentration Σ(Al₂0₃+Na₂0) = 30 - 50% in the amount corresponding to atomic ratio of Al from sodium aluminate to Si from sodium silicate between 0.02 to 1 and after mixing for a period of 1 to 3 minutes, final addition of calcium oxide with granulation not exceeding 0.01 mm in the amount of 0.25 to 0.5% in relation to the weight of the entire glass batch or calcium hydroxide in the amount of 0.35 to 0.7 % in relation to the weight of the entire glass batch to previously prepared solution of sodium aluminosilicate and intensive blending during 1 to 5 minutes. The resulting suspension is added to an initial blend of all ingredients of glass batch excluding soda and then mixed for a period of 2 to 10 minutes. After which, soda is added and the entire batch is mixed for a period of 1 to 5 minutes.addition of silicate

To obtain total compacting, it is beneficial in the course of blending and pelletizing to maintain the glass batch temperature above 35.4°C i.e. above the point of disintegration of the heptahydrates of soda. When mixing is completed, initial caked batch is obtained and it may be subject to accelerated polycondensation of aluminosilicate binding agent through its heating on fluid bed, preferably with hot air stream or exhaust waste (gas) diluted with cold air to temperature exceeding 35.4°C, i.e. the point of Na₂CO₃·7H₂O hydrate disintegration, preferably to temperature exceeding 60°C, the most- preferable to temperature exceeding 110°C i.e. the point of Na₂CO₃·H₂O hydrate disiritegration. The blended batch may be subject to granulation in a drum or disc pelleting machine or to briquetting, e.g. on a cylindrical briquetting machine.

This invention also solves the problem of aluminium deficit in slag. When applying the proposed method, significant amount of hydrated calcium and sodium poly(aluminosilicate)s may be obtained in aqueous suspension very quickly, from few to several minutes, when applying slags poor in aluminium or even non-slag batches. Aluminium deficit in glass batch may be balanced through introduction of sodium aluminate solution at the stage of polycondensation; sols of hydrated calcium and sodium poly(aluminosilicate)s may be obtained by using mixtures consisting of hydrated sodium silicates, sodium aliminate, and calcium oxide or hydroxides.

Referring to the fact that the most important factor for thickening glass batches is the generation of a suitable amount of inorganic binding agent, preferably in the form of viscous sol that, on the one hand, guarantees fluidity, which provides film coverage to as many raw material grains as possible and, on the other hand, features appropriately high viscosity which provides thicker gel layers on grains in a manner that those films even after penetration by the tiniest grains guarantee sufficient adhesion, most of all, between huge sand grains. It is obvious that it will be necessary to modify the environment in which polycondensation takes place towards increasing the number of hydrated calcium and sodium orthosilanes/orthosilcates at the cost of hydrated calcium disilooxonates. The best method to achieving this goal is supplementation of glass batch, which was obtained from products of dissolving slag, with an additional introductory substance - not earlier than at this stage - containing the necessary [AlOₙ(OH)₍₄₋ₙ₎]^{(n+1)"} anions with aluminium having a coordination number of 4. Such raw material may be a sodium aluminate solution, preferably in the form of waste by-product, eg. obtained through aluminium anodising.

Chen Nianyi, Liu Miaoxiu and Yang Jingxiu (Influence of Preparative History on Phisico-chemical Properties of Sodium Aluminate Solutions. Chin.J.Mat.Sci. Technol. 8, 1992, 135-137*)* proved that sodium aluminate solution contains both Al[(OH)₄]⁻ and [(OH)₃Al-0-Al(OH)₃]²⁻ ions, where aluminium exists in a tetrahedral coordination, and [Al(OH)₆]³⁻ ions, where aluminium exists in the undesirable octahedral coordination as well as [Al₂(OH)₁₀]⁴⁻, where both types of coordination are present. To accelerate polycondensation of aluminosilicate sols, only Al[(OH)₄]⁻ and [(OH)₃Al-0-Al(OH)₃]²⁻ anions with tetrahedral coordinated aluminium are useful as these are able to substitute [SiOₙ(OH)(₄₋ₙ)]ⁿ⁻ ions in hydrated calcium disiloxones. Increasing concentration of aluminium in tetrahedral coordination in sodium aluminate solutions helps lowering pH of solutions as per the following reactions:

[Al(OH)₆]³⁻ ↔ [Al(OH)₄]⁻ + 2OH⁻ and 2[Al(OH)₆]³⁻ ↔ [Al₂(OH)₁₀]⁴⁻ + 2OH⁻

This effect may be obtained through simple addition of sodium aluminate solution to the solution of hydrated sodium silicates as the preceding ones feature pH = 14 in most cases, and the latter ones feature pH = 10.5 to 12.5 appropriately for module 2.5 and 1.6. When both solutions are mixed proportionally in a manner to guarantee the maintaining of the Al/Si molar ratio not exceeding 1:1 and aluminate solution is added to silicate solution, not the other way around, then aluminosilicate sol is formed very quickly upon mixing of these solutions. It may transform into a gel without precipitation of any aluminium hydroxide. Due to the fact that in case of alkaline activation of slag by water glass a lowering of pH also occurs as OH⁻ groups take part in hydroxyl attack on aluminium and silicate in mellite structure and in binding to hydrated structures of calcium and sodium orthosilans and hydrated calcium disiloxones, thus by following a suitable procedure, the desired effect of a fast creation of poly(aluminosilicate) binding agent in the form of sol, which would be useful to bind ingredients of glass batch, may be obtained. This procedure includes 3 stages:
1. Addition of hydrated sodium silicate solution with SiO₂/Na₂O initial module in between 1.6 to 2.5 in the amount corresponding to 1 to 5% of the sum (Si0₂+Na₂0) introduced by water-glass to the weight of all ingredients of glass batch to water taken in the amount corresponding to 8 to 25% of the weight of all ingredients of glass batch. As a result of dilution of sodium silicate solution, the degree of dissociation increases while the mean size of silicate anions decreases. This facilitates generating of hydrated polyaluminosilicates upon addition of slag in the second stage.
2. Addition of fine-milled blast-furnace slag with average granulation not exceeding 10µm, preferably not exceeding 7µm, most preferably not exceeding 2µm in the amount corresponding to 1 to 15% of all ingredients of the mixture for water-glass solution to obtained diluted sodium silicate solution and its activation through intense blending in the period of 3 to 20 minutes. As a result, particles of hydrated sodium and calcium orthosilanes and hydrated calcium disiloxones pass into the solution.
3. Addition of aqueous sodium aluminate solution with Al₂0₃/Na₂O module to activated slag suspension from range 0.5 to 1.0 and Σ(Al₂0₃+Na₂O) = 30 - 50% concentration in the amount corresponding to atomic ratio of Al from sodium aluminate to Si from sodium silicate 0.02 to 1. As a result of lowering the pH, at the beginning, a portion of Al[(OH)₄]⁻ ions increases at the cost of [Al(OH)₆]³⁻ and simultaneously substitution of [SiOₙ(OH)₍₄₋ₙ₎]ⁿ⁻ groups begins in hydrated calcium disiloxones with [AlOₙ(OH)₍₄₋ₙ₎]⁽ⁿ⁺¹⁾⁻ ···Na⁺. groups. As a result of this process, the contribution of hydrated calcium and sodium orthosilanes in solution increases at the cost of hydrated calcium disiloxones.

Obtaining suitable amount of sol of calcium and sodium hydrated poly(aluminosilicate) requires the use of appropriate precursors and maintaining process conditions. First of all, water-glass with a proper module and concentration must be used. Research shows, that water-glass with high modules (Si0₂/Na₂0 = 3,2) even upon dilution and/or module change through addition of NaOH maintains colloidal particle structure. Colloidal micelles are significantly worse precursors in reactions based on the attack of hydroxyl groups, which is the first stage of alkaline activation of slag and moreover result in completely different products after polycondensation. Using water-glass with a lowered module (e.g. SiO₂/Na₂O = 0.6) or sodium hydroxide itself is disadvantageous also for the reason that only the first stage is accelerated, i.e. dissolving of slag, which is not accompanied by the change of ratio between the amount of stable hydrated calcium disiloxones in relation to hydrated calcium and sodium orthosilanes.
In the second stage, there are three crucial factors that determine the course of the process. The most important of which is to use slag with the highest available aluminium content and the lowest content of calcium and magnesium. This supports increasing the ratio of hydrated calcium and sodium orthosilanes and/or magnesium in the solution after completion of the first stage of their alkaline activation. The second contributing factor includes usage of slag with the lowest granulation (at least not exceeding 10µm, preferably not exceeding 7µm, the most preferably not exceeding 2µm), which influences the reaction rate which is adequate to the available time of binding agent formation in the process of blending glass batch (activation time 1 to 30 minutes). The last factor is the application of at least a minimum time of initial blending of slag in water-glass solution (for slags containing 6 to 8% of Al₂O₃ and 38 to 43% of CaO estimated to be 3 minutes), which guarantees formation of such amounts of hydrated calcium and sodium orthosilanes and hydrated calcium disiloxanes that after addition of appropriate amount of sodium aluminate these will make the binding agent in the form of sol of hydrated calcium and sodium polyaluminosilicates that enable linking 100% of ingredients into compact agglomerates. Required amount of binding agent is conditioned by the type of raw materials applied in the preparation of the glass batch, their granulation and mutual proportions. Basically, the more portion of soda is contained in the batch, especially in the form of light soda, and the more minor raw material fractions are used, the more binding agent for linking is needed.
In the third stage, it is crucial to keep/maintain the sequence of addition of sodium aluminate into the suspension of activated slag, as its role is to transform part of the hydrated calcium disiloxones into hydrated calcium and sodium orthosilanes so that the range of polycondensation of calcium and sodium cycloorthodisiloxosilanes is increased. As a result, it should be introduced to the system not earlier than after completion of slag activation in silicate water-glass environment. It is disadvantageous to carry out slag activation in sodium silicate solution and mix silicate and sodium aluminate. In the first case, significant portion of [Al(OH)₆]³⁻, where aluminium occurs in hexahedral coordination leads to formation of hydrated calcium aluminates, where aluminium maintains hexahedral coordination. In the second case, gelation may be carried out and the gel that has been formed leads to formation of a binding agent that features significantly worse adhesive properties in comparison to calcium and sodium poly(aluminosilicate) sol, which further is subject to polycondensation after granular pellets' formation.

Procedure of thickening glass batches according to above described invention may be applied to all batches, where allowable upper limit of iron content in glass, expressed as Fe₂0₃, will not be lower than 0.04%. In case of highly colourless glasses with permeability/transmittance in the visible range, limiting level of iron content (sometimes lower than 0.015% Fe₂O₃) prohibits application of slag as a batch ingredient. In such cases, aluminosilicate binding agent may be obtained as per modified procedure as follows:
1. Addition of silicate water-glass with SiO₂/Na₂0 initial module 1.6 to 2.5 in the amount corresponding 1 to 5% of the sum (SiO₂+Na₂O) as contributed by water-glass to the weight of all ingredients of the batch to water taken in the amount corresponding to 8 to 25% of the weight of all ingredients of the glass batch. As a result of dilution of water-glass solution, average size of polysilicate particles is decreased and degree of dissociation is increased and this facilitates substitution of the part of [SiOₙ(OH)₍₄₋ₙ₎]ⁿ⁻ with [AlOₙ(OH)₍₄₋ₙ₎]⁽ⁿ⁺¹⁾⁻ ···Na⁺ groups.
2. Addition of sodium aluminate with Al₂O₃/Na₂O module to sodium silicate solution, which was obtained earlier, from the range 0.5 to 1.0 and concentration Σ(Al₂O₃+Na₂O) = 30 - 50% in the amount corresponding to atomic ratio of Al from sodium aluminate to Si from sodium silicate 0.02 to 1 , the most preferably in the form of waste generated in other technological processes, e.g. aluminium anodising. As a result of lowering of pH, the amount of Al[(OH)₄]⁻ ions increases at the cost of [Al(OH)₆]³⁻ ions and simultaneously substitution of [SiOₙ(OH)₍₄₋ₙ₎]ⁿ⁻ group with [AlOₙ(OH)₍₄₋ₙ₎]⁽ⁿ⁺¹⁾⁻···Na⁺. group commences. As a result, the portion of hydrated sodium aluminosilicates increases in the solution. This process should be carried out in the period of 1 to 10 minutes during intense blending.
3. Addition of calcium oxide with granulation not exceeding 0.01 mm in the amount of 0.25 to 0.5% in relation to the weight of the entire glass batch or calcium hydroxide in the amount of 0.35 to 0.7 % in relation to the weight of the entire glass batch to previously prepared sodium aluminosilicate solution and bringing the batch to intense blending in the period of 1 to 10 minutes. As a result, particles of hydrated calcium and sodium aluminosilicates and hydrated calcium silicates are generated.

The described process is quite different from the methods for glass batch thickening included in available patents (pelletizing or briquetting) with application of caustic soda and/or water-glass solutions. In the case of glass batches which do not contain very fine milled slag (average granulation not exceeding 10 µm), during the mixing process, there do not appear to be any substantial chemical processes which would lead to formation of products that can act as volumetric binding agents containing calcium and sodium polyaluminosilicates. In the process of granulation, only adhesion effect of sand grains covered with thin film of hydrated sodium silicate is used. This statement concerns also thickening of glass batches containing granulated blast-furnace slag with typical granulation that have been manufactured specifically for glass-making industry such as Calumite (not exceeding 20% of fraction smaller than 100 µm and 80% of fraction with granulation 100 to 630 µm), where expected activation times exceed 24 hours.
Except geopolymers based on granulated blast-furnace slag, there are some geopolymers obtained through alkaline activation of aluminosilicates with, most frequently, thermally damaged crystalline structure such as methacholine and other silty materials that have been subject to calcination. Broad family of geopolymers constitute those based on alkaline activation of volatile ashes .
Considering the significantly decreased rate of activation of thermally calcinated silty materials in comparison to slags, their technological importance in the process of polyaluminosilicate binding agent generation in the period of few to several minute may be ignored.
High iron content is also the obstacle for application of calcinated silty materials and volatile ashes. For this reason, volatile ashes may be used for generation of binding agents based on polyaluminosilicate sols only in the case of colour glasses, i.e. amber and green. In the course of testing of mixtures containing 60% of methacholine and 40% of slag that have been activated with NaOH and water-glass mixture with final module 2 in temperature 80°C, initial binding time (18 minutes) and final binding time (28 minutes) were obtained. It indicates the possibility to use those for preparation of binding agents which would contain polyaluminosilicate sols.
Activation and geopolymerisation of low-calcium aluminosilicates or those that do not contain calcium runs as follows: 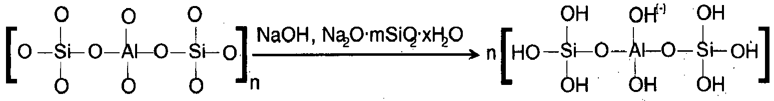 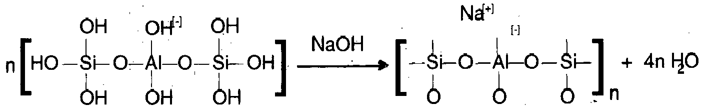 Standard aluminosilicate ingredients of glass batches are also feldspar. Unfortunately, their crystalline features, range, and speed of alkaline activation make these not entirely suitable for generation of binding agents containing sols of hydrated polyaluminosilicates which could be used in the course of preparation of glass batches in the period of time comparable to times of mixing raw materials.

### Examples.

### Example I

20 kg of water-glass solution with 1.75 module and concentration Σ(Si0₂+Na₂0) = 43% and 30 kg of blast-furnace slag that contained 6.5% of Al₂O₃, 43% of CaO, 6.5% of MgO and 37% of SiO₂ was added into 155 kg of water. The entire mixture was activated throughout 20 minutes, and then 5 kg of sodium aluminate with module Al₂0₃/Na₂O = 0.6 and concentration Σ(Al₂0₃+Na₂0) = 37% was added to this suspension. The entire mixture was additionally blended throughout 10 minutes. Obtained suspension, which contained sol of hydrated calcium and sodium aluminosilicates, was added to initially blended glass batch that contained: 435 kg of sand, 85 kg of feldspar, 70 kg of dolomite, and 4 kg of anhydrite and then the entire mixture was intensely blended for 4 minutes. At the end, 200 kg of soda was added to this suspension and, again, the entire mixture was blended additionally for 2 minutes. Then, the batch was pellitized in a drum pelleting machine. In the course of the procedure of blending and pelletizing, the temperature exceeded 40°C. This batch enables obtaining colourless glass with approx. 0.1 % content of Fe₂O₃.

### Example II

10 kg of water-glass solution with 1.75 module and concentration Σ(Si0₂+Na₂0) = 43% and 20 kg of sodium aluminate with Al₂O₃ /Na₂O= 0.6 and concentration Σ(Al₂0₃+Na₂0) = 37% was added into 135 kg of water. Then the entire mixture was blended for 10 minutes. Later 7 kg of calcium hydroxide in the form of hydrated lime was added into this solution and blended for 10 minutes. The obtained suspension, which contained sol of hydrated calcium and sodium aluminosilicates, was added to initially blended glass batch that contained: 455 kg of sand, 75 kg of feldspar, 85 kg of dolomite, and 6 kg of anhydrite and then subject to intense blending for 4 minutes. At the end, 225 kg of soda was added to this suspension and additionally blended for 2 minutes. Upon completion of blending, this batch was pelletized in a drum pelleting machine. In the course of the entire procedure of blending and pelletizing, the temperature exceeded 40°C. It is glass batch designed for obtaining colourless glass with low and very low content of Fe₂O₃.

## Claims

1. A method of glass batch thickening of includes addition of a binding agent, obtained through geopolymerisation to the basic glass batch **characterized in that** a binding agent in the form of water suspension, which contains sol of hydrated calcium and sodium aluminosilicates, is added to the mixture of weighed ingredients of non-sodium glass batch which is obtained through following accelerated geopolymerisation:
• partial dissolution of calcium precursor in a solution of hydrated sodium silicates,
• forced substitution of part of [SiOₙ(OH)₍₄₋ₙ₎]ⁿ⁻ groups in hydrated calcium silicates with [AlOₙ(OH)₍₄₋ₙ₎]⁽ⁿ⁺¹⁾⁻ ···(n+1)Na⁺ groups derived from sodium aluminate solution,
• polycondensation of obtained hydrated calcium and sodium, aluminosilicates,
• blending of the binding agent with ingredients of basic glass batch and adding weighed soda portion,
• pelletizing and briquetting,
• accelerated polycondensation of aluminosilicate binding agent.

2. Method of glass batch thickening as per claim 1, **characterised in that** the calcium precursor is provided by very fine milled slag with average graining 1µm to 10µm in the amount corresponding to 1% to 15% of the weight of all glass batch ingredients.

3. Method of glass batch thickening as per claim 1, **characterised in that** the calcium precursor is provided by calcium oxide with graining below 0.01 mm in the amount of 0.25% to 0.5% in relation to the weight of the entire glass batch.

4. Method of glass batch thickening batch as per claim 1, **characterised in that** the calcium precursor is provided by calcium hydroxide with graining below 0.01 mm in the amount 0.35% to 0.7 % in relation to the entire glass batch.

5. Method of glass batch thickening as per claim 1, **characterised in that** the partial dissolution of the calcium precursor is carried out in hydrated sodium silicate solution with initial module SiO₂/Na₂O from 1.6 to 2.5 derived in the amount corresponding to 1% to 5% of the sum of SiO₂+Na₂O oxides brought by those hydrated silicates to the weight of all glass batch ingredients. It is obtained through its dilution in the amount of water corresponding to 8% to 25% of the weight of all glass batch ingredients and through blending for 1 to 30 minutes.

6. Method of glass batch thickening as per claim 1, **characterised in that** a forced substitution of part of [SiOₙ(OH)₍₄₋ₙ₎]ⁿ⁻ groups in hydrated calcium silicates is carried out with [AlOₙ(OH)₍₄₋ₙ₎]⁽ⁿ⁺¹⁾⁻ ···(n+1)Na⁺ groups which come from sodium aluminate solution with module Al₂O₃/Na₂O from range 0.5 - 1.0 and concentration of oxides' sum Σ(Al₂O₃+Na₂O) = from 30% to 50%, in the amount corresponding to atomic ratio of Al from sodium aluminate to Si from sodium silicate from 0.02 to 1.

7. Method of glass batch thickening as per claim 1, **characterised in that** the polycondensation of the obtained hydrated calcium and sodium aluminosilicates is carried out through additional blending in a period of 1 to 30 minutes.

8. Method of glass batch thickening as per claim 1, **characterised in that** the obtained binding agent is blended with ingredients of basic glass batch in a period of 1 to 10 minutes at temperature exceeding 34.5°C and, in addition, at the end of blending weighed portion of soda is added.

9. Method of glass batch thickening as per claim 1, **characterised in that** upon pelletizing or briquetting, the process of accelerated polycondensation of aluminosilicate binding agent in granulated or briquetted glass batch is carried out through its heating up on fluid bed, the most advantageously by hot air stream or waste gas (exhaust waste) diluted by cold air to temperature exceeding 35.4°C, i.e. point of hydrate disintegration Na₂CO₃·7H₂O, more advantageously exceeding 60°C, the most advantageously exceeding 110°C i.e. the point of hydrate disintegration Na₂CO₃·H₂O.

10. Method of glass batch thickening as per claim 1, **characterised in that** the applied sodium aluminate is provided in a form of waste arising in the process of aluminium anodising.
